# EUROPEAN PATENT SPECIFICATION

(11) **EP 2 759 859 B1**
(45) Date of publication and mention of the grant of the patent: **16.05.2018**
(21) Application number: 13153034.7
(22) Date of filing: 29.01.2013
(51) Int. Cl.: G02B 6/38, G02B 6/44

(54) **Guiding support and kit for terminating a transmission cable**
Führungsstütze und Kit zum Abschließen eines Übertragungskabels
Support de guidage et kit pour terminer un câble de transmission

(43) Date of publication of application: 30.07.2014
(73) Proprietor: Tyco Electronics Nederland B.V., 5222 AR's-Hertogenbosch (NL)
(72) Inventor: Elenbaas, Jacco, 4794 RP Heyningen (NL)
(74) Representative: Grünecker Patent- und Rechtsanwälte PartG mbB

(56) References cited:
- US-A- 3 497 608
- US-A1- 2012 121 222
- US-A1- 2012 308 183

## Description

The present invention relates to a guiding support for guiding at least one transmission line between an end cap on a transmission cable and a terminal terminating the transmission line, the guiding support comprising at least one holding structure at a rear end of the guiding support, at least one seating with a clearance configured to receive at least one adapter piece for holding the terminal at a front end of the guiding support and at least one channel for guiding the at least one transmission line from the rear end to the front end.

Further, the present invention relates to a kit for a terminating arrangement for terminating a transmission cable.

Terminating arrangements and kits therefor mentioned above are known from the prior art. In the terminating arrangements, end caps are commonly used which serve as terminating members facilitating the handling of an end section of a cable, e.g. in an enclosure, and guide at least one line of the cable so that it may be terminated and e.g. provided with an optical fibre connector or a terminal which may be a part of the connector.

For example, the cable may be an optical fibre cable and the transmission line may be an optical fibre. Optical fibres may come as units comprising a fibre element with several individual fibres. The fibres may be bundled to bundles comprising several fibres. Such a bundle or several bundles may be accommodated within a cable. As the fibres themselves are rather long and thin and therefore prone to damage, e.g. by snapping and cracking, it is desired to provide a strain relief in order to eliminate any stresses which could act on the fibres themselves.

Document US 2012/0121222 A1 describes a fibre optic connector assembly comprising a holder with an inner profile shaped to receive a portion of an optic fibre connector on one end, with a section having a plurality of teeth on another end for holding a portion of a fibre cable, and with a passage therebetween for guiding the fibre.

According to the prior art, strain relief is commonly achieved in that the layer of Kevlar® surrounding each line, e.g. fibre or bundle of fibres, or all lines of the cable, is affixed to a connector by crimping a ferrule around the layer of Kevlar®, which is thereby clamped. Alternatively, cables with a central strength member in the form of a rod running centrally through the cable may be used. Then, instead of the layer of Kevlar®, the strength member is fixed to a terminating member or enclosure by e.g. crimping a ferrule around the strength member.

In any case, a certain over-length of the transmission line may occur. However, within a tight cable, it may be cumbersome to store this over-length. As a result, a high compression force has to be applied to the ferrule. International standards specify a maximum compression crimping force.

Additionally, the transmission line normally has to be affixed within the enclosure, e.g. with the help of additional means such as adapters. In other words, two separate actions are necessary for terminating the cable according to the prior art. Thus, when using both the Kevlar® layer surrounding any lines or optical fibres and the central rod as strength members, terminating the cable so that strain relief is achieved may be cumbersome and time-consuming.

In view of the disadvantages arising from the possibilities for terminating a transmission cable according to the prior art as mentioned above, it is an object of the present invention to reduce costs and at the same time to facilitate and expedite the procedure of terminating a transmission cable while providing strain relief.

This object is achieved according to the present invention with the initially mentioned guiding support in that the holding structure comprises at least one slot extending essentially perpendicularly to the at least one channel and being at least partly limited by a rear wall of the guiding support, wherein the rear wall is provided with at least one rear opening, the at least one slot being configured to receive a fixation member of the end cap.

For the initially mentioned kit for a terminating arrangement, the object is achieved in that the kit comprises at least one guiding support according to the present invention and by an end cap having a fixation member formed complementary to the holding structure of the guiding support, and/or by an adapter piece formed complementary to the seating of the guiding support.

These solutions have the decisive advantage over the prior art that, within the guiding support, especially within the channel thereof, a free space or zone for accommodating the transmission line may be provided. An over-length of the transmission line may be accommodated or compensated within the free space with low stress and therefore low forces. Within the slot, the fixation member of the end cap may be received, so that any stresses acting especially in a longitudinal direction of the cable may be easily supported at the guiding support, e.g. in that the fixation member engages the slot and is immobilized herein.

Thus, any crimping procedure of a ferrule placed around a layer of Kevlar® or a central strength member may be omitted. Therefore, costs may be reduced. The guiding support itself may provide strain relief between an end section of the cable and the terminal terminating at least one transmission line. The guiding support may be formed as a sort of boot or sleeve arranged between the end cap and the terminal. For example, the fixation member of the end cap may comprise a plate to be inserted into a slot of the holding structure of the guiding support. Fixation elements of the fixation member may be formed as noses at an edge region of the plate and/or at an edge region of the adapter piece. Thereby, in an assembled state of the terminating arrangement, the guiding support may be in engagement with the end cap and/or with the adapter piece.

In a method for terminating a transmission cable, strain relief may be achieved by bringing the end cap and/or the adapter piece into engagement with the rear end and front end of the guiding support, respectively. The adapter piece may be configured for holding the terminal. Therefore, the adapter piece may provide a clamping structure, such as a socket or orifice, for holding the terminal.

The above-mentioned solutions according to the present invention may be combined in any way with any one of the following advantageous embodiments of the present invention respectively and thus further improved.

According to a first possible further embodiment, a width and/or height of the channel may exceed a diameter of the transmission line. A free space for laterally and/or vertically moving the transmission line within the channel may be provided. Thereby, the cable may be received laterally and/or vertically displaceable within the channel. Thus, storing an over-length of the transmission line may be facilitated.

A passage for optical fibre may be formed in a divider between the holding structure and at least one channel. The divider, i.e. in the form of a dividing wall, may help in supporting the fixation member of the end cap within the holding structure. The passage may facilitate guiding the at least one transmission line between the holding structure and the at least one channel.

At least one counter fixation member for immobilizing the end cap with respect to the guiding support may be formed at the holding structure. The counter fixation member may be formed, complementary to a fixation element of the fixation member e.g. as an indentation. The fixation member may be formed as a nose. Thereby, the fixation member may be easily latched at or within the holding structure. This facilitates the affixation of the end cap at the guiding support.

The guiding support may be captively but still detachably connected to the end cap.

The at least one counter latching element may be arranged laterally at the holding structure.

Thereby, especially vertical immobilization of the end cap with respect to the guiding support may be achieved.

The seating of the guiding support may open towards the front and via a front opening. A tubular part of the terminal may extend through the front opening into the guiding support and especially into the seating, so that the tubular part or any other kind of extension of the terminal may be brought into engagement with the adapter piece received within the seating.

A vertical elasticity and/or lateral elasticity of the guiding support may exceed a longitudinal elasticity of the guiding support. Thereby, the terminal may be flexibly moved in the vertical and/or lateral direction with respect to the end cap while a distance of the terminal to the end cap measured in the longitudinal direction of the cable may essentially stay the same. This facilitates handling the terminating arrangement while at the same time strain relief is ensured in order to protect the transmission line from undue stresses which could occur between the end cap and the terminal.

Recesses, e.g. slits, may be formed in a top wall, a bottom wall and/or a sidewall of the guiding support, so that an elasticity of the top wall, the bottom wall and/or the sidewall is enhanced. Thereby, flexibility of the guiding support may be easily enhanced while, at the same time, material for manufacturing the guiding support may be saved.

The top wall, the bottom wall and/or the sidewall may comprise a meandering structure. In other words, the top wall, the bottom wall and/or the sidewall may have a basket-like structure. Thereby, the flexibility of the guiding support may be optimized.

The guiding support may comprise at least one other channel extending from the front end to the rear end. The number of channels may be adapted to the number of transmission lines desired to be guided in the guiding support. An individual channel may be assigned to each transmission line.

The at least one channel and the at least one other channel may be at least partially separated from each other by a partition. The partition, which may have the form of a partition wall, may extend essentially in the vertical and/or longitudinal direction between the channels: This allows the channels to be assigned to a certain transmission line and prevents entanglement of the transmission lines.

The partition may provide a bridge essentially directly connecting the holding structure to the seating. The bridge may be formed as a material band extending from the holding structure to the seating. Vertical slits may be formed within the bridge and may extend from a bottom of the guiding support or partition to the bridge. Thereby, an elasticity of the partition may be improved.

The bridge may help in absorbing any stresses acting especially in the longitudinal direction between the end cap and the terminals. The bridge may be arranged essentially coaxially with respect to the transmission cable so that strain relief may be provided while vertical and/or lateral flexibility is maintained.

The guiding support may comprise at least two shells extending from the rear end to the front end and complementing each other. The shells may be formed identically. Together, the shells may form any of the parts of the guiding support mentioned above and may comprise locking and counter locking elements which may be formed at an outer wall as well the partition of the guiding support for fixing the shells to each other. Alternatively, or additionally, the shells may be connected to each other via parts of the end cap, e.g. the fixation member and the terminal, e.g. the adapter piece, which may each be brought into engagement with the shells. Further, the locking element or an additional element of the shells may provide a coding which defines a correct orientation of the shells with respect to each other when assembling the guiding support of at least two shells.

The invention will be described in more detail by way of example hereinafter with reference to the accompanying drawings, which illustrate advantageous embodiments. The described embodiments are only possible configurations in which the individual features may, however, as described above, be implemented independently of each other or be omitted. Corresponding elements illustrated in the drawings are provided with the same reference signs. Parts of the description relating to the same elements in different drawings are omitted.

In the drawings:
- Fig. 1: shows a schematic perspective view of a terminating arrangement according to an embodiment of the present invention;
- Fig. 2: shows a schematic perspective view of a shell of a guiding support according to an embodiment of the present invention;
- Fig. 3: shows another schematic perspective view of a shell of a guiding support according to an embodiment of the present invention;
- Fig 4: shows a schematic perspective view of an end cap according to an embodiment of the present invention;
- Fig. 5: shows a schematic perspective view of an adapter piece according to an embodiment of the present invention;
- Fig. 6: shows a schematic perspective view of a kit for a terminating arrangement according to an embodiment of the present invention in a first pre-assembled state;
- Fig. 7: shows a schematic perspective view of a kit for a terminating arrangement according to an embodiment of the present invention in a second pre-assembled state;
- Fig. 8: shows a schematic perspective view of a kit for a terminating arrangement according to an embodiment of the present invention in a third pre-assembled state;
- Fig. 9: shows a schematic front view of a kit for a terminating arrangement according to an embodiment of the present invention in the assembled state;
- Fig. 10: shows a schematic side view of the kit for a terminating arrangement illustrated in Fig. 9; and
- Fig. 11: shows a schematic cross-sectional view of the kit for a terminating arrangement illustrated in Figs. 9 and 10 along the cross-sectional line A-A depicted in Fig. 9.

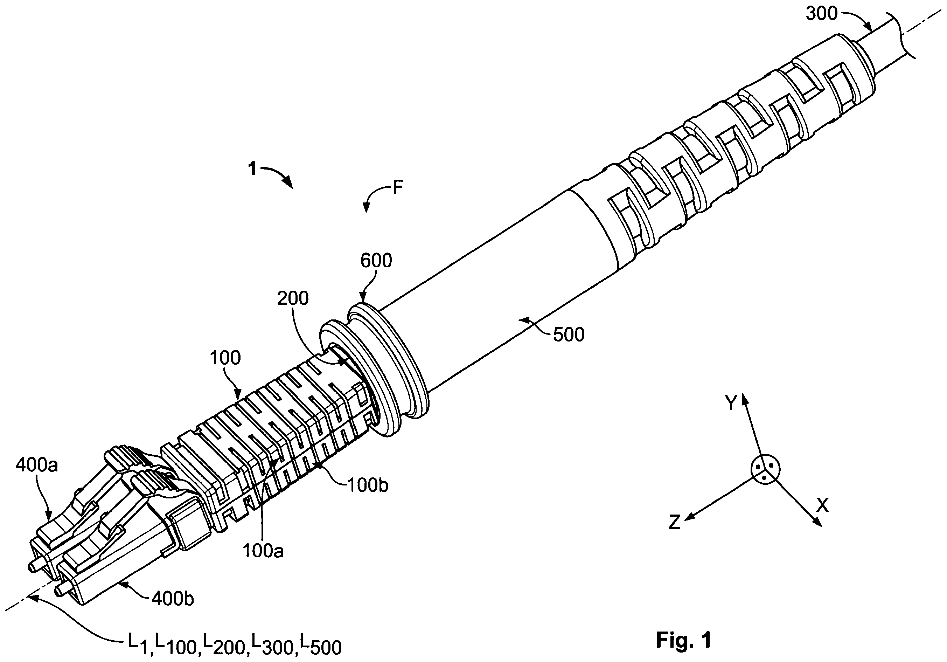

Fig. 1 is a schematic perspective view of a kit for a terminating arrangement 1 according to an embodiment of the present invention. The kit for a terminating arrangement 1 comprises a guiding support 100, an end cap 200 and is used for terminating a transmission line 300 while providing strain relief between the transmission line 300 and at least one terminal 400, in the present case two terminals, i.e. terminal 400a and terminal 400b. The terminating arrangement 1 is arranged such that a longitudinal axis L₁₀₀ of the guiding support 100, a longitudinal axis L₂₀₀ of the end cap 200 and a longitudinal axis L₃₀₀ of the transmission line 300 are essentially superimposed upon each other and thereby constitute a common longitudinal axis L₁ of the terminating arrangement 1. The longitudinal axis L₁ of the terminating arrangement 1 runs essentially in parallel to a longitudinal direction Z of the terminating arrangement 1. The longitudinal direction Z runs essentially perpendicularly to a lateral direction X of the terminating arrangement 1. The lateral direction X and the longitudinal direction Z run essentially perpendicularly to a vertical direction Y of the terminating arrangement 1. In other words, the lateral direction X, the vertical direction Y and the longitudinal direction Z essentially constitute a Cartesian coordinate system. Further, the guiding support 100 comprises an upper shell 100a and a lower shell 100b, which are latched or locked in the assembled state F and are stacked upon each other in the vertical direction Y. A boot 500 of the terminating arrangement 1 at least partially surrounds the end cap 200 and the cable 300. The boot 500 may be moulded around the end cap 200 and the cable 300, so that a longitudinal axis L₅₀₀ of the boot 500 may essentially be superimposed with the longitudinal axis L₁ of the terminating arrangement 1. A seating member 600 may be provided which facilitates the mounting of the terminating arrangement 1. The seating member 600 may have the form of an O-ring snugly encompassing the end cap 200.

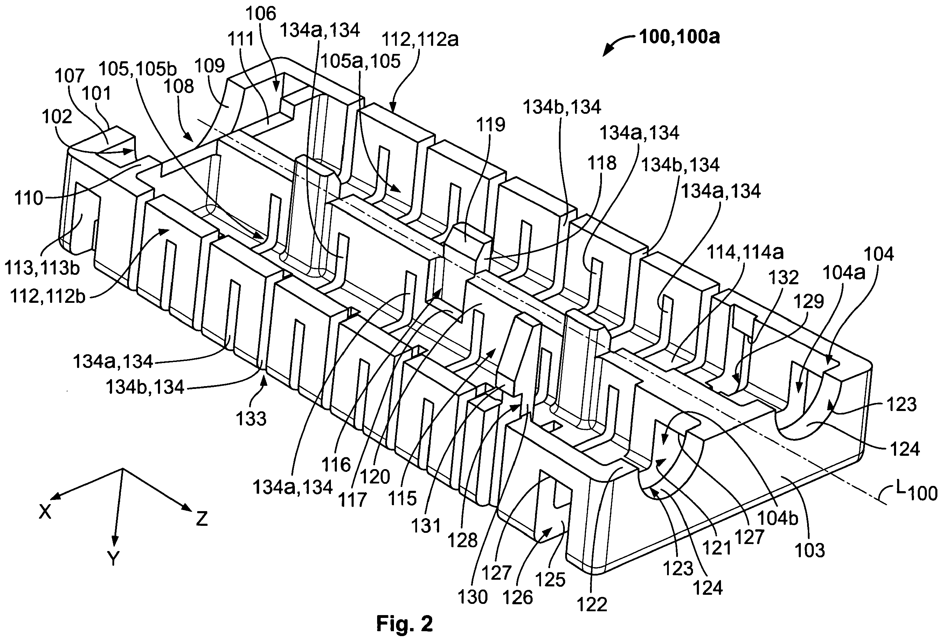

Fig. 2 shows the guiding support 100, in particular the upper shell 100a of the guiding support 100, in a schematic perspective view. At the rear end 101, the guiding support 100 is provided with a holding structure 102 which is configured to receive a fixation member (not yet shown) of the end cap 200. At a front end 103, the guiding support 100 is provided with seatings 104, in particular a first seating 104a and a second seating 104b, which are configured to receive the first terminal 400a and the second terminal 400b, respectively. Channels 105, in particular a first channel 105a and a second channel 105b, extend from the holding structure 102 to the seatings 104 along the longitudinal direction Z in order to take up and protect at least one transmission line (not yet shown) each.

The holding structure 102 comprises a slot 106 extending essentially perpendicularly to the longitudinal extension of the channels 105. In other words, the slot 106 extends essentially in the plane along the lateral direction X and the vertical direction Y. Towards the rear end 101, the slot 106 is at least partly limited by a rear wall 107 of the guiding support 100. A rear opening 108 may be essentially formed as a semi-circular rear cut-out 109 in the rear wall 107. Towards the channels 105, the slot 106 may be bordered by a divider 110, i.e. a wall serving as a divider between the holding structure 102 and the channels 105. Within the divider 110, a passage 111 from the holding structure 102 to the channels 105 may be formed, so that transmission lines can pass through the divider 110 via the passage 111. Laterally, the holding structure 102, in particular the slot 106, may be bordered by respective sidewalls 112 of the guiding support, in particular a first sidewall 112a and a second sidewall 112b. Counter fixation members 113, in particular a first counter fixation member 113a and a second counter fixation member 113b, respectively, may be formed in the sidewalls 112a and 112b, respectively. The counter fixation members 113 may be formed as indentations in order to take up fixation elements formed at a fixation member of the end cap 200.

The channels 105 may be laterally bordered by the sidewalls 112. A longitudinal wall 114, in particular a top wall 114a, may border the channels 105 in the vertical direction Y, in particular towards the top of the guiding support 100 i.e. of the upper shell 100a. The channels 105 may be separated from each other by a partition 115, i.e. a wall extending in the plane along the longitudinal direction Z and the vertical direction Y between the channels 105. In Fig. 2, an upper partition 115a is shown. The top wall 114a may be provided with interlacing elements 116 which are configured to interlace with complementarily formed interlacing elements 116 on the lower shell 100b in order to enhance stability of the partition 115. The interlacing elements 116 may comprise a cut-out 117 formed complementarily to a stud 118 of the interlacing elements 116. In order to facilitate an engagement of opposing interlacing elements 116 formed at the upper shell 100a and the lower shell 100b, the stud 118 may be provided with a bevel 119.

A bridge 120 between the rear end 101 and the front end 103 may be formed by a central part of the partition 115 in the vicinity of the longitudinal axis L₁₀₀ of the guiding support 100. In the present embodiment, the bridge connects the divider 110 to the seatings 104, so that forces may be transferred from the end cap 200 to the terminals 400 via the bridge. Thereby, strain relief between the end cap 200 and the terminals 400 may be provided.

The seatings 104 each comprise a clearance 121 configured to take up an adapter piece (not yet shown) for holding the terminals 400. Towards the front end 103, the clearance 121 may be bordered by a front wall 122 of the guiding support 100. A front opening 123 in the front wall 122 may be formed as a semi-circular front cut-out 124. Towards the channels 105, each seating 104, in particular each clearance 121, may be regarded as being bordered by an edge 125 formed in the longitudinal wall 114, in particular the top wall 114a of the upper shell 100a shown in Fig. 2. The edge 125 is defined by a recess 126 which may extend essentially in parallel to the lateral direction X through the sidewalls 112 and the partition 115. The recess 126 additionally helps to define counter latching elements 127 of the seating 104 in that edges 127 for supporting latching elements (not yet shown) of the adapter pieces (not yet shown) are provided.

Further, locking elements 128 and counter locking elements 129 may be formed at the upper shell 100a, which are configured to engage with respective counter locking elements 129 and locking elements 128, respectively, formed at the lower shell 100b in order to retain the upper shell 100a and the lower shell 100b in the assembled state F. The locking elements 128 may be formed as latching tongues 130 provided with noses 131 adapted for engaging with the counter locking elements 129 which may therefore be provided with detents 132 formed complementarily to the latching tongues.

Moreover, the guiding support 100 may be provided with a meandering structure 133. The meandering structure 133 may be formed by staggered slits 134. The slits 134 may be provided as first slits 134a and second slits 134b, essentially extending in a plane running in the lateral direction X and the vertical direction Y. The first slits 134a may extend partly through the sidewalls 112 and partly through the longitudinal wall 114, as well as partly through the partition 116, where they may be limited by the bridge 120. The second slits 134b may extend through the entire sidewalls 112 and partly through the longitudinal wall 114, but not into the partition 116. Thereby, the first and second slits 134a, 134b may be offset so that they provide the meandering structure 133 of the sidewalls 112, the longitudinal walls 114 and the partition 116. The slits 134 enhance a flexibility of the guiding support 100 in the lateral direction X and the vertical direction Y.

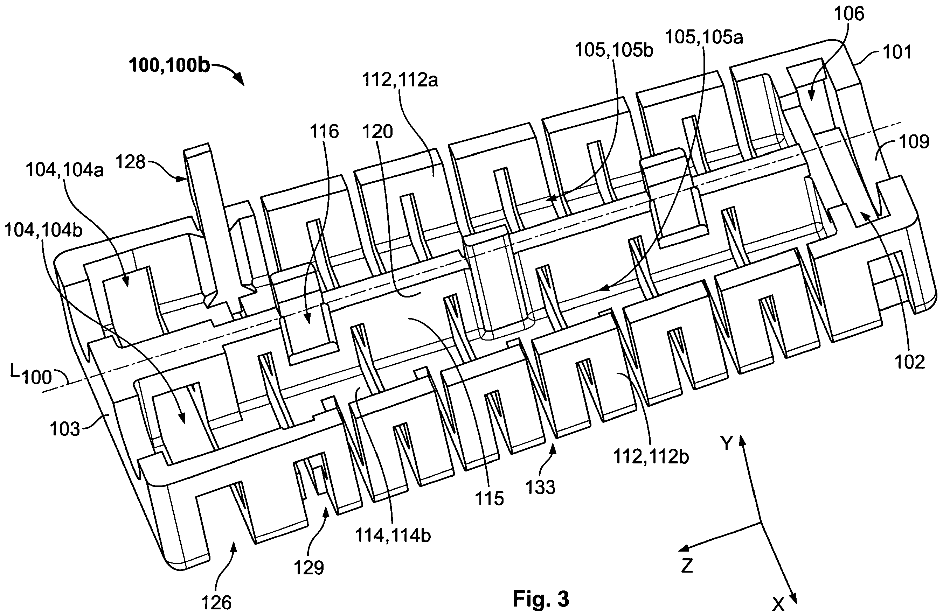

Fig. 3 shows a schematic perspective view of the guiding support 100, in particular of the lower shell 100b of the guiding support 100. As can be seen, the lower shell 100b may be designed identically and at the same time complementarily to the upper shell 100a. Hence, the lower shell 100b may comprise a holding structure 102 at its rear end 101 and seatings 104 arranged at its front end 103. Channels 105 may extend from the holding structure 102 to the seatings 104. The channels 105, in particular 105a and 105b may be laterally bordered by sidewalls 112a and 112b, respectively. The longitudinal wall 114 may vertically border the channels 105 and may provide a bottom wall 114b of the guiding support 100. The partition 115 may separate the channels 105.

Further, the interlacing elements 116 may be provided which may overlap with the corresponding interlacing elements 116 on the upper shell 100a. The locking element 128 and the counter locking element 129 may be provided for locking the lower shell 100b with the upper shell 100a in the assembled state F by engaging with the counter locking element 129 and the locking element 128, respectively, provided at the upper shell 100a. The meandering structure may be provided, so that the flexibility of the guiding support 100 allowing for bending the guiding support in the lateral direction X and/or vertical direction Y exceeds the flexibility of the guiding support 100 in the longitudinal direction Z. At the same time, the bridge 120 may allow for transferring stresses between the holding structure and the seatings 104 in order to thus provide strain relief between the end cap 200 received in the holding structure 102 and the terminals 400 received in the seatings 104.

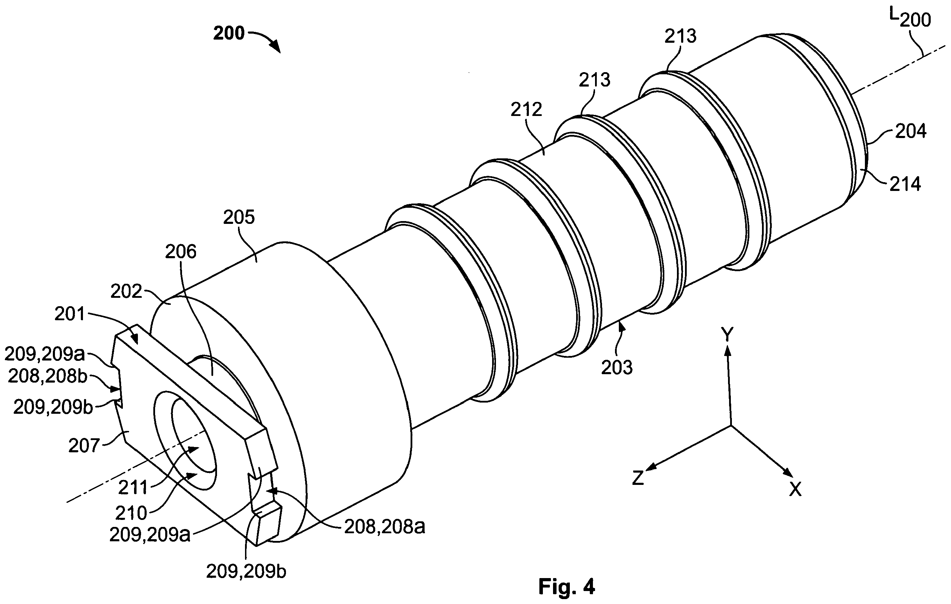

Fig. 4 shows a schematic perspective view of a possible configuration of the end cap 200 according to an embodiment of the present invention. The end cap 200 may comprise a fixation member 201 at its front end 202 and a cable attachment section 203 extending against the longitudinal direction Z from the front end 202 towards a rear side 204 of the end cap 200. The fixation member 201 and the cable attachment section 203 may be separated from each other by a collar 205 which may have an essentially annular shape.

The fixation member 201 may comprise an essentially annular base extending from the front side 202 in the longitudinal direction Z and being arranged concentrically to the longitudinal axis L₂₀₀ of the end cap 200. A plate 207 may be arranged concentrically to the longitudinal axis L₂₀₀ of the end cap 200 at an end of the base 206 facing in the longitudinal direction Z. Lateral edges of the plate 207 may be provided with fixation structures 208, in particular a first fixation structure 208a and a second fixation structure 208b assigned to the first counter fixation member 113a and the second counter fixation member 113b, respectively, of the guiding support 100. Each fixation structure 208 may be provided with fixation elements 209, in particular with an upper fixation element 209a and a lower fixation element 209b. The fixation elements 209 may be formed as noses configured to engage the counter fixation members 113, i.e. to jut into the indentations of the counter fixation members 113.

An outlet 210 may be arranged concentrically to the longitudinal axis L₂₀₀ of the end cap 200 so that transmission lines (not yet shown) may exit a through-hole 211 extending through the end cap 200 concentrically to the longitudinal axis L₂₀₀ of the end cap 200. The cable attachment section 203 of the end cap 200 may comprise an essentially tubular body 212 which is arranged and formed concentrically with respect to the longitudinal axis L₂₀₀ of the end cap 200. At its outer circumference, the body 212 may be provided with several annular ribs 213 which enhance the stability of a connection between the cable attachment section 203 and the transmission cable 300 and/or the boot 500. Attaching the cable 300 to the end cap 200 may be facilitated by a circumferential bevel 214 provided at the rear side 204 of the end cap 200.

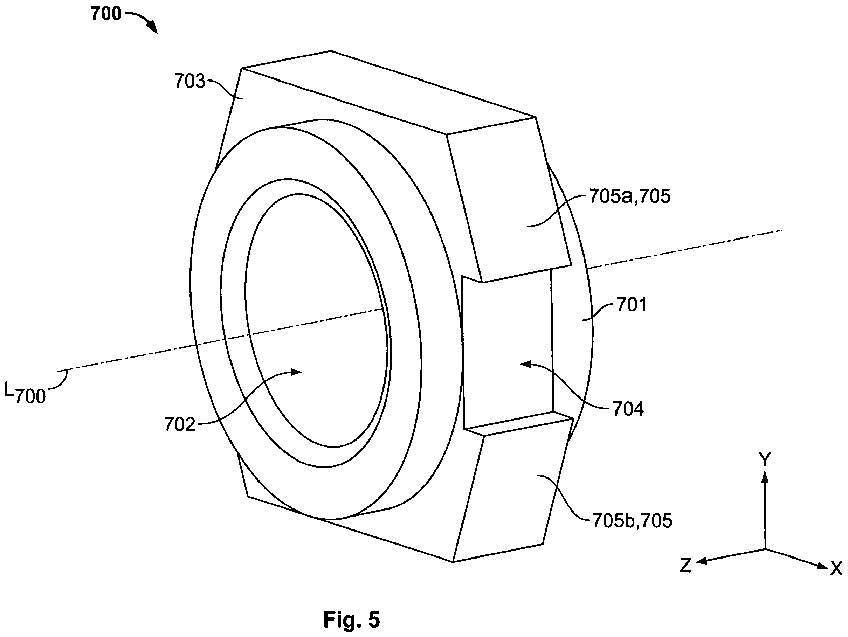

Fig. 5 shows a schematic perspective view of an adapter piece 700 according to an embodiment of the present invention. The adapter piece 700 may comprise a base body 701 having an orifice 702 through which a longitudinal axis L₆₀₀ of the adapter piece 700 extends essentially in parallel to the longitudinal direction Z. A frame 703 of the adapter piece 700 may circumferentially surround the base body 701 or may be formed at the outer circumference thereof. The frame 703 may be provided at both of its lateral sides with a latching member 704. Each of the latching members 704 may comprise at least one latching element 705, in particular an upper latching element 705a and a lower latching element 705b, which are configured to engage with the counter latching elements 127, formed at the upper shell 100a and the lower shell 100b, respectively.

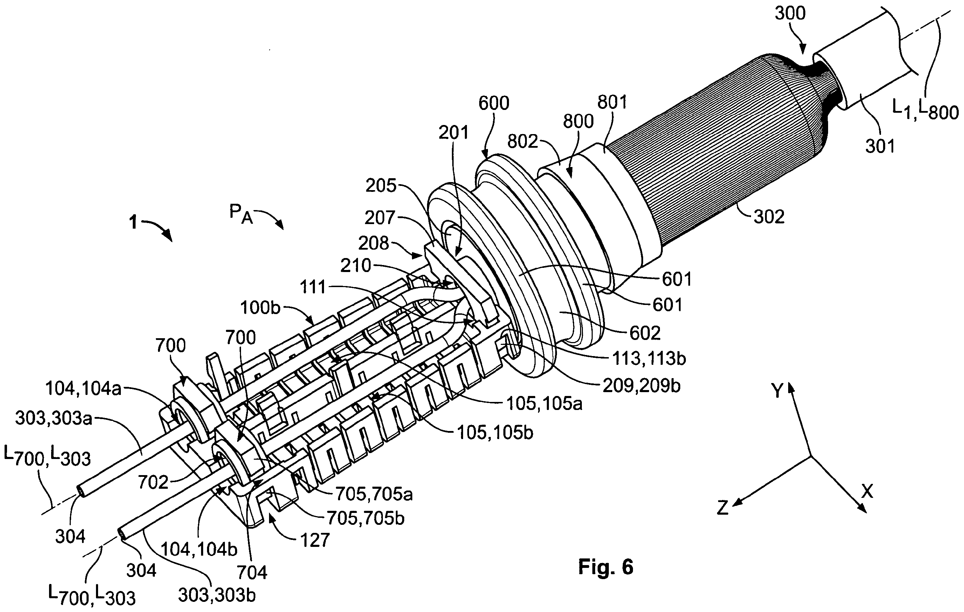

Fig. 6 shows a schematic perspective view of the terminating arrangement 1 in a first pre-assembled state P_{A}. In the first pre-assembled state P_{A}, the cable 300 may be stripped such that a sheath 301 of the cable 300 is at least partly removed towards an end of the cable 300 to be terminated by the terminating arrangement 1. Underneath the sheath 301, a strength member and/or braid 302 of the cable 300 may be arranged. The strength member 302 may be pulled over the cable attachment section 203 of the end cap 200. In other words, the cable attachment section 203 may be inserted into the strength member 302. At the same time, at least one transmission line 303 may be pulled through the through-hole 211 of the end cap 200, such that the transmission line 303 exits the end cap 200 through the outlet 210.

Additionally, the terminating arrangement may comprise a rim 800. The rim 800 may comprise a tubular section 801 and a hoop 802 which may circumferentially surround the tubular section 801. The rim 800 may be arranged circumferentially around the strength member 302 and may abut the collar 205 of the end cap 200. Thereby, the strength member 302 may be jammed between the cable attachment section 203, or at least a free end section of the strength member 302 pointing in the longitudinal direction Z may be covered by the rim 800 in order to be protected and held in place.

The fixation structure 208 of the end cap 200 may be received in the holding structure 102 such that the fixation structure 208 of the end cap 200 engages with the counter fixation member 113 of the guiding support 100. In particular, the lower fixation elements 209b of the fixation structure 208 may be in engagement with the counter fixation members 113 of the lower shell 100b as shown in Fig. 6. Thereby, the lower shell 100b may be latched to the end cap 200 like a tray.

The lines 303, in particular a first transmission line 303a and a second transmission line 303b, may run through the channels 105a and 105b, respectively, from the holding structure 102 via the passage to the seatings 104a and 104b, respectively. At least one adapter piece 700 may be received in each of the seatings 104. The latching members 304 of the adapter pieces 700 may be in engagement with the counter latching elements 127 arranged laterally at the seatings 104. In particular, the lower latching element 705b of each of the adapter pieces 700 may engage the respective counter latching element 127, so that the adapter pieces 700 are captively held within the seatings 104. The lines 303 may extend through the orifices 702 of the adapter pieces in such a way that a longitudinal axis L₃₀₃ of each line 303 essentially superimposes the respective longitudinal axis L₇₀₀ of the adapter piece 700. Free ends 304 of the lines 303 pointing in the longitudinal direction Z may be already received in a terminal 400, each, while the adapter pieces 700 may hold a terminal 400 each.

Further, the seating member 600 may be fitted around the collar 205 of the end cap 200. The seating member 600 may encompass the collar 205. The seating member 600 may be provided with two circumferential beadings 601 which may define a circumferential groove of the seating members 600 between them in order to facilitate a mounting and sealing-up of the terminating arrangement 1.

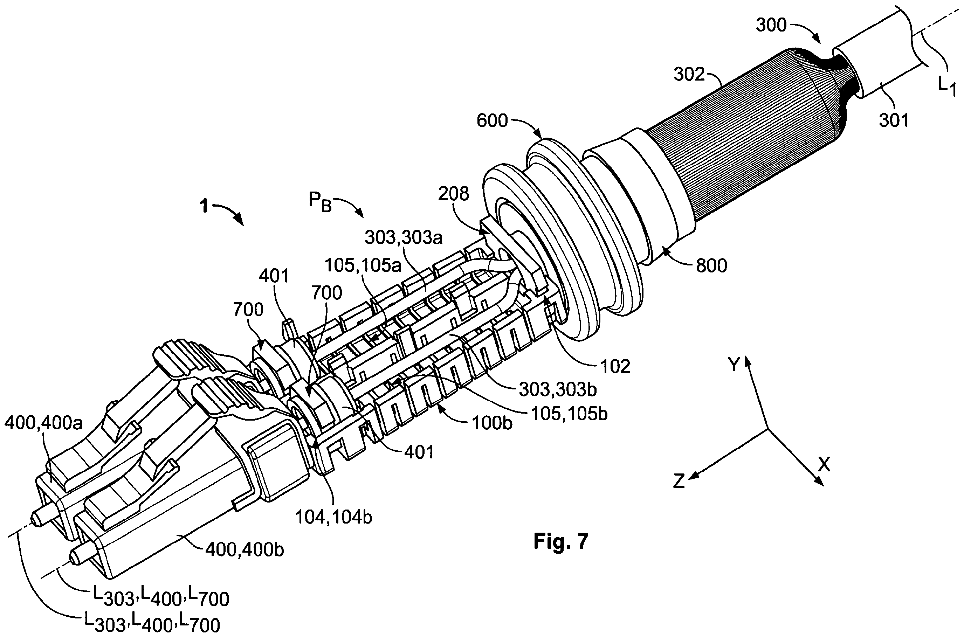

Fig. 7 shows a schematic perspective view of a second pre-assembled state P_{B} of the terminating arrangement 1. Here, in contrast to the first pre-assembled state P_{A} illustrated in Fig. 6, each adapter piece 700 holds a terminal 400 for each of the lines 303. In particular, the line 303a may be terminated by the terminal 400a, which is provided with the adapter piece 700 received in the seating 104a. Accordingly, the line 303b may be terminated by the terminal 400b, which is provided with the adapter piece 700 received in the seating 104b. The terminals 400 may be provided with adapter pieces 700 before placing the adapter pieces 700 into the seatings 104. Thereby, the terminals 400 with the adapter pieces 700 may be handled as a single component. Each of the terminals 400 may be provided with a mounting section 401. The mounting section 401 may be formed as a tubular extension of the terminal 400 protruding therefrom opposite to the longitudinal direction Z. At least one line 303 may enter the terminal 400 through the mounting section 401.

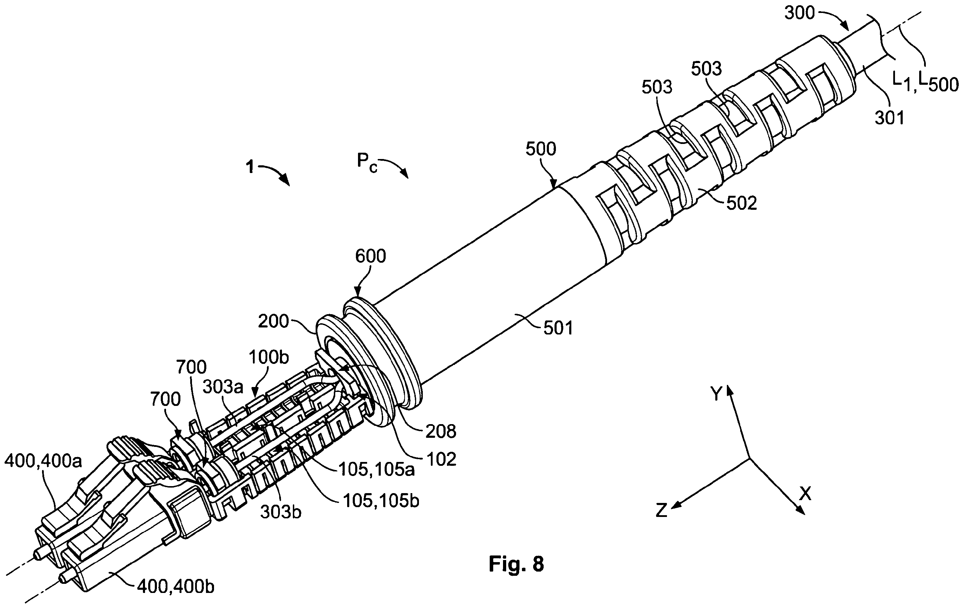

Fig. 8 shows a schematic perspective view of the terminating arrangement 1 in a third pre-assembled state P_{C}. The third pre-assembled state P_{C} differs from the pre-assembled state P_{B} illustrated in Fig. 7 in that the terminal arrangement 1 additionally comprises the boot 500. The boot 500 at least partly circumferentially surrounds the end cap 200 and the cable 300. A main section 501 of the boot may have an essentially tubular form and may essentially surround the cable attachment section 203 of the end cap 200 as well as the rim 800 and the strength member 302 up to an end section of the sheath 301 with which the main section 501 may overlap. A transition section 502 of the boot 500 may extend away from the main section 501 against the longitudinal direction Z and may taper in a direction opposite to the longitudinal direction Z. The transition section 502 may be provided with notches enhancing an overall flexibility of the transition section 502 in order to facilitate a handling, in particular a bending, of the terminating arrangement 1 in the region of the transition section 502. The boot 500 may be attached to the terminating arrangement 1, e.g. by moulding before or after providing the lines 303 with terminals 400.

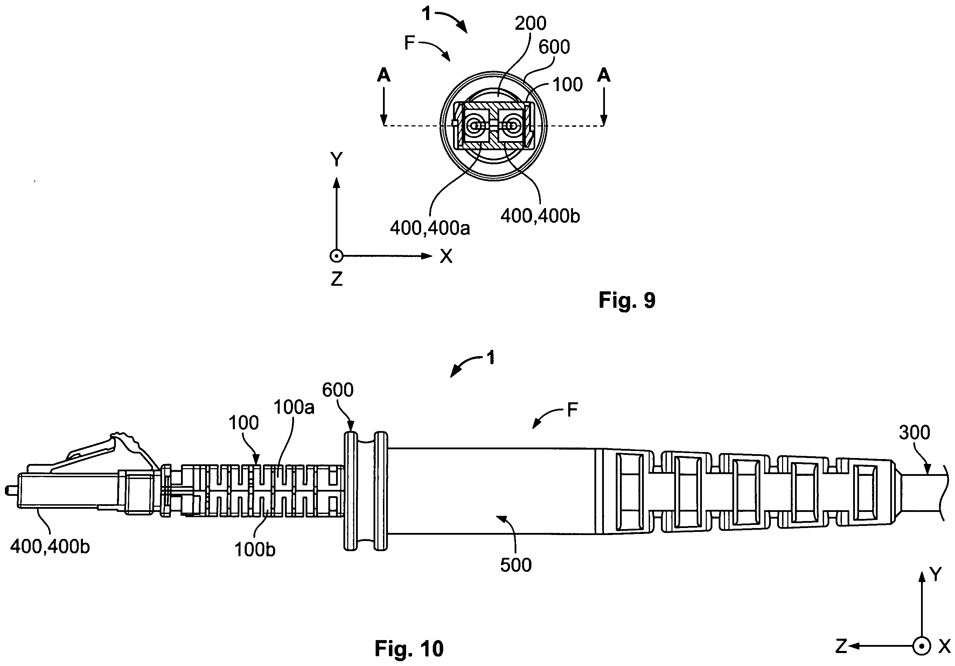

Fig. 9 shows a schematic front view of the terminating arrangement 1 in the assembled state F. The terminals 400a and 400b are held side by side in the lateral direction X by the guiding support 100. Hence, the terminals 400a and 400b are aligned such that mating the terminals with any socket or other kind of mating connector is facilitated. An outer diameter of the seating member 600 may exceed an outer diameter, i.e. a maximum height and a maximum width of the terminals 400a and 400b, measured in the vertical direction Y and in the lateral direction X, respectively, so that the terminals 400 and the guiding support 100 e.g. may be introduced to an enclosure in the longitudinal direction Z and the seating member 600 may serve for affixing the terminating arrangement 1 at an opening of the enclosure.

Fig. 10 shows a schematic side view of the terminating arrangement 1 in the assembled state F. Here it becomes apparent that the guiding support forms a bridge between the end cap 200 with the seating member 600 and the boot 500 robustly holding the cable 300 at one side, as well as holding the terminals 400 at the other side, so that a strain relief between the cable 300 and the terminals 400 is provided and thereby the lines 303 are protected against undue stresses, especially against pulling forces acting between the cable 300 and the terminals 400.

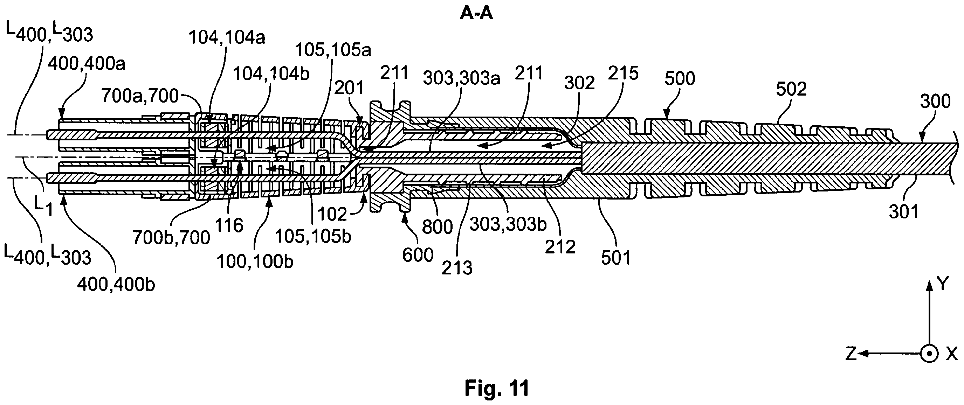

Fig. 11 shows a schematic cross-sectional view along the cross-sectional line A-A depicted in Fig. 9. Here it becomes apparent that the strength member 302 and the end of the sheath 301 of the cable 300 may be fully surrounded by the main section 501 of the boot 500. The strength member 302 may be firmly held between the boot 500 and the body 212 of the end cap 200. The end section of the strength member 302 pointing in the longitudinal direction Z may be additionally protectively held by the rim 800 surrounding it. The lines 303 may be inserted through an inlet 215 at the rear side 204 into the through-hole 200. Then, the lines 303 may be guided through the through-hole 211 and exit the end cap 200 via the outlet 210 at the fixation member 201 which may be firmly held in the holding structure 102 of the guiding support 100. The lines 303 may then be separated in the region of the passage 111 between the holding structure 102 and the channels 105.

In the channels 105, the lines 303 may be guided in such a way that an over-length of the lines 303 may be compensated in the free space provided laterally, i.e. in the lateral direction X, vertically, i.e. in the vertical direction Y, and longitudinally, i.e. in the longitudinal direction Z. The lines 303 may then enter the terminals 400 through their respective mounting section 401 which may be firmly held by a respective adapter piece 700 in the respective seating 104 of the guiding support 100. The fixation member 201 and the adapter pieces 700 may be fully immobilized in that they are encompassed by the holding structure 102 and the seatings 104, respectively, because the upper shell 100a and the lower shell 100b, of the guiding support are locked in the assembled state by the fixation elements 209, latching elements 705 and/or locking elements 128 and counter locking elements 129. The interlacing elements may stabilize the partition 115 between the channels 105.

Deviations from the above-described embodiments are possible within the inventive idea. A terminating arrangement 1 may comprise guiding supports 100, end caps 200, transmission cables 300, terminals 400, boots 500, seating members 600, adapter pieces 700 and/or rims 800 in whatever number and form desired for a specific application.

The guiding support 100 may comprise an upper shell 100a and a lower shell 100b and may have rear ends 101, holding structures 102, front ends 103, seatings 104, channels 105, slots 106, rear openings 108, rear cut-outs 109, dividers 110, passages 111, sidewalls 112, counter fixation members 113, longitudinal walls 114, partition walls 115, interlacing elements 116, cut-outs 117, studs 118, bevels 119, bridges 120, clearances 121, front walls 122, front openings 123, front cut-outs 124, edges 125, recesses 126, counter latching elements 127, locking elements 128, counter locking elements 129, latching tongues 130, noses 131, detents 132, meandering structures 133 and/or slits 134 in whatever number and form desired, consistent with the claims, for holding at least one end cap 200 and at least one adapter piece 700 in a force-fit and/or positive fit manner and/or by a frictional connection.

The end cap 200 may be provided with fixation members 201, front sides 202, cable attachment sections 203, rear sides 204, collars 205, bases 206, plates 207, fixation structures 208, fixation elements 209, outlets 210, through-holes 211, bodies 212, ribs 213, bevels 214 and/or inlets 215 in whatever number and form required for affixing and guiding a transmission cable 300 as well as transmission lines 303 thereof and in order to be connected to the guiding support 100, as defined by claims 1-14, in a force-fit and/or positive fit manner and/or by a frictional connection.

The transmission cable 300 may be any kind of cable that may comprise transmission lines 303 in whatever number and form desired for transmitting data, signals and/or power. For example, the transmission lines may be optical fibres or copper strands. The transmission cable 300 may be provided with a sheath 301 and/or strength members 302 in whatever number and form desired.

The terminal 400 may have a mounting section 401 in whatever form and shape desired for affixing the terminal at an adapter piece 700 and/or in the seating 104. The terminal 400 may be any kind of connector, e.g. an optical and/or electrical plug-in connector desired for a particular application.

The boot 500 may have a main section 501, a transition section 502 and/or notches 503 in whatever form and number desired. The boot 500 may be pre-manufactured and may slid over the other parts of the terminating arrangement 1 or may be moulded to the terminating arrangement 1.

The seating member 600 may be provided with beadings and/or grooves 602 in whatever number and form desired for a certain application. The seating member may have an annular shape or any other required shape.

The adapter piece 700 may comprise base bodies 701, orifices 702, frames 703, latching members 704 and/or latching elements 705 in whatever number and form desired for establishing a force-fit and/or positive fit as well as a frictional connection with the seating 104. The adapter piece 700 may be formed integrally with the terminal 400. In other words, the terminal 400, in particular the mounting section 401 of the terminal 400, may comprise the adapter piece 700.

The rim 800 may have tubular sections 801 and hoops 802 in whatever number and form desired for being placed around the end cap 200 and/or the strength member 302. When assembling a terminating arrangement 1 from a kit according to an embodiment of the present invention, the guiding support 100, the end cap 200, the transmission cable 300, the terminal 400, the boot 500, the seating member 600, the adapter piece 700 and/or the rim 800 may be assembled in whatever (chronological) order as desired and feasible for a certain application. Hence, the first pre-assembled state P_{A}, the second pre-assembled state P_{B} and/or the third pre-assembled state P_{C} mentioned herein do not have to be obligatorily followed in the order described herein.

**Reference Signs**

| **No.** | **Part** | | **No.** | **Part** |
|---|---|---|---|---|
| 1 | terminating arrangement | | 134 | slits |
| | | | 134a | first slit |
| 100 | guiding support | | 134b | second slit |
| 100a | upper shell | | | |
| 100b | lower shell | | 200 | end cap |
| 101 | rear end | | 201 | fixation member |
| 102 | holding structure | | 202 | front side |
| 103 | front end | | 203 | cable attachment section |
| 104 | seating | | 204 | rear side |
| 104a | first seating | | 205 | collar |
| 104b | second seating | | 206 | base |
| 105 | channel | | 207 | plate |
| 105a | first channel | | 208 | fixation structure |
| 105b | second channel | | 208a | first fixation structure |
| 106 | slot | | 208b | second fixation structure |
| 107 | rear wall | | 209 | fixation element |
| 108 | rear opening | | 209a | upper fixation element |
| 109 | rear cut-out | | 209b | lower fixation element |
| 110 | divider | | 210 | outlet |
| 111 | passage | | 211 | through-hole |
| 112 | sidewall | | 212 | body |
| 112a | first sidewall | | 213 | rib |
| 112b | second sidewall | | 214 | bevel |
| 113 | counter fixation member | | 215 | inlet |
| 113a | first counter fixation member | | | |
| 113b | second counter fixation member | | 300 | transmission cable |
| 114 | longitudinal wall | | 301 | sheath |
| 114a | top wall | | 302 | strength member/braid |
| 114b | bottom wall | | 303 | transmission line |
| 115 | partition | | 303a | first transmission line |
| 116 | interlacing elements | | 303b | second transmission line |
| 117 | cut-out | | 304 | free end |
| 118 | stud | | | |
| 119 | bevel | | 400 | terminal/connector |
| 120 | bridge | | 400a | first terminal |
| 121 | clearance | | 400b | second terminal |
| 122 | front wall | | 401 | mounting section |
| 123 | front opening | | | |
| 124 | front cut-out | | 500 | boot |
| 125 | edge | | 501 | main section |
| 126 | recess | | 502 | transition section |
| 127 | counter latching element | | 503 | notch |
| 128 | locking element | | | |
| 129 | counter locking element | | 600 | seating member |
| 130 | latching tongue | | 601 | beading |
| 131 | nose | | 602 | groove |
| 132 | detents | | | |
| 133 | meandering structure | | | |
| 700 | adapter piece | | X | lateral direction |
| 701 | base body | | Y | vertical direction |
| 702 | orifice | | Z | longitudinal direction |
| 703 | frame | | | |
| 704 | latching member | | L₁ | longitudinal axis of terminating arrangement |
| 705 | latching element | | L₁₀₀ | longitudinal axis of guiding support |
| 705a | upper latching element | | L₂₀₀ | longitudinal axis of end cap |
| 705b | lower latching element | | L₃₀₀ | longitudinal axis of transmission line |
| | | | L₄₀₀ | longitudinal axis of terminal |
| 800 | rim | | L₅₀₀ | longitudinal axis of boot |
| 801 | tubular section | | L₆₀₀ | longitudinal axis of seating member |
| 802 | hoop | | L₇₀₀ | longitudinal axis of adapter piece |
| | | | L₈₀₀ | longitudinal axis of rim |
| | | | | |
| | | | P_{A} | first pre-assembled state |
| | | | P_{B} | second pre-assembled state |
| | | | P_{C} | third pre-assembled state |
| | | | F | (fully) assembled state |

## Claims

1. Guiding support (100) for guiding at least one transmission line (303) between an end cap (200) on a transmission cable (300) and a terminal (400) terminating the at least one transmission line (303), the guiding support (100) having a rear end (101) and a front end (103) and comprising at least one holding structure (102) at the rear end (101), at least one seating (104) with a clearance (121) configured to receive at least one adapter piece (700) for holding the terminal (400) and at least one channel (105) for guiding the at least one transmission line (303) from the rear end (101) to the front end (103), **characterised in that** the at least one holding structure (102) comprises at least one slot (106) extending essentially perpendicularly to the at least one channel (105) and being at least partly limited by a rear wall (107) of the guiding support (100), wherein the rear wall (107) is provided with at least one rear opening (108), the at least one slot (106) being configured to receive a fixation member (201) of the end cap (200).

2. Guiding support (100) according to claim 1, **characterised in that** a width and/or height of the least one channel (105) exceeds a diameter of the at least one line (303).

3. Guiding support (100) according to claim 1 or 2, **characterised in that** a passage (111) for the at least one transmission line (303) is formed in a divider (110) between the at least one holding structure (102) and the at least one channel (105).

4. Guiding support (100) according to at least one of claims 1 to 3, **characterised in that** at least one counter fixation member (113) for immobilizing the end cap (200) with respect to the guiding support (100) is formed at the at least one holding structure (102).

5. Guiding support (100) according to claim 4 **characterised in that** the at least one counter fixation member (113) is arranged laterally at the at least one holding structure (102).

6. Guiding support (100) according to at least one of claims 1 to 5, **characterised in that** the at least one seating (104) opens towards the front end (103) via a front opening (123).

7. Guiding support (100) according to at least one of claims 1 to 6, **characterised in that** a vertical elasticity and/or lateral elasticity of the guiding support (100) exceeds a longitudinal elasticity of the guiding support (100).

8. Guiding support (100) according to at least one of claims 1 to 7, **characterised in that** slits (134) are formed in a top wall (114a), a bottom wall (114b), and/or a sidewall (112) of the guiding support (100) so that an elasticity of the top wall (114a), the bottom wall (114b), and/or the sidewall (112) is enhanced.

9. Guiding support (100) according to claim 8, **characterised in that** the top wall (114a), the bottom wall (114b), and/or the sidewall (112) comprise a meandering structure (133).

10. Guiding support (100) according to at least one of claims 1 to 9, **characterised in that** the guiding support (100) comprises at least one other channel (105) essentially extending from the front end (103) to the rear end (101).

11. Guiding support (100) according to claim 10, **characterised in that** the at least one channel (105) and the at least one other channel (105) are at least partially separated from each other by a partition (115).

12. Guiding support (100) according to claim 11, **characterised in that** the partition (115) provides a bridge (120) essentially directly connecting the at least one holding structure (102) to the at least one seating (104).

13. Guiding support (100) according at least one of claims 1 to 12, **characterised in that** the guiding support (100) comprises at least two shells (100a, 100b) extending from the rear end (101) to the front end (103) and complementing each other.

14. Guiding support (100) according at least one of claims 1 to 13, **characterised in that** the at least one rear opening (108) is essentially formed as a semi-circular cut-out (109) in the rear wall (107).

15. Kit for a terminating arrangement (1) for terminating a transmission cable (300) **characterised by** at least one guiding support (100) according to at least one of claims 1 to 14 above and by an end cap (200) having a fixation member (201) formed complementarily to the at least one holding structure (102) of the guiding support (100) and/or by an adapter piece (700) formed complementarily to the at least one seating (104) of the guiding support (100).

## Patentansprüche

1. Führungshalterung (100) zum Führen wenigstens einer Übertragungsleitung (303) zwischen einer Endkappe (200) an einem Übertragungskabel (300) und einem Anschluss (400), der die wenigstens eine Übertragungsleitung (303) abschließt, wobei die Führungshalterung (100) ein hinteres Ende (101) und ein vorderes Ende (103) aufweist und wenigstens einen Halteaufbau (102) an dem hinteren Ende (101), wenigstens einen Sitz (104) mit einem Zwischenraum (121), der konfiguriert ist, um wenigstens ein Adapterteil (700) zum Halten des Anschlusses (400) aufzunehmen, und wenigstens einen Kanal (105) zum Führen der wenigstens einen Übertragungsleitung (303) von dem hinteren Ende (101) zu dem vorderen Ende (103) umfasst,
**dadurch gekennzeichnet, dass**
der wenigstens eine Halteaufbau (102) wenigstens einen Schlitz (106) umfasst, der sich im Wesentlichen senkrecht zu dem wenigstens einen Kanal (105) erstreckt und wenigstens teilweise durch eine hintere Wand (107) der Führungshalterung (100) begrenzt wird, wobei die hintere Wand (107) mit wenigstens einer hinteren Öffnung (108) versehen ist, wobei der wenigstens eine Schlitz (106) konfiguriert ist, um ein Fixierungsglied (201) der Endkappe (200) aufzunehmen.

2. Führungshalterung (100) nach Anspruch 1, **dadurch gekennzeichnet, dass** die Breite und/oder Höhe des wenigstens einen Kanals (105) größer ist als der Durchmesser der wenigstens einen Leitung 303.

3. Führungshalterung (100) nach Anspruch 1 oder 2, **dadurch gekennzeichnet, dass** ein Durchgang (111) für die wenigstens eine Übertragungsleitung (303) in einem Teiler (110) zwischen dem wenigstens einen Halteaufbau (102) und dem wenigstens einen Kanal (105) ausgebildet ist.

4. Führungshalterung (100) nach einem der Ansprüche 1 bis 3, **dadurch gekennzeichnet, dass** wenigstens ein Gegenfixierungsglied (113) zum Fixieren der Endkappe (200) in Bezug auf die Führungshalterung (100) an dem wenigstens einen Halteaufbau (102) ausgebildet ist.

5. Führungshalterung (100) nach Anspruch 4, **dadurch gekennzeichnet, dass** das wenigstens eine Gegenfixierungsglied (113) lateral an dem wenigstens einen Halteaufbau (102) angeordnet ist.

6. Führungshalterung (100) nach einem der Ansprüche 1 bis 5, **dadurch gekennzeichnet, dass** sich der wenigstens eine Sitz (104) zu dem vorderen Ende (103) über eine vordere Öffnung (123) öffnet.

7. Führungshalterung (100) nach einem der Ansprüche 1 bis 6, **dadurch gekennzeichnet, dass** die vertikale Elastizität und/oder laterale Elastizität der Führungshalterung (100) größer ist als die longitudinale Elastizität der Führungshalterung (100).

8. Führungshalterung (100) nach einem der Ansprüche 1 bis 7, **dadurch gekennzeichnet, dass** Schlitze (134) in einer oberen Wand (114a), einer unteren Wand (114b) und/oder einer Seitenwand (112) der Führungshalterung (100) ausgebildet sind, sodass die Elastizität der oberen Wand (114a), der unteren Wand (114b) und/oder der Seitenwand (112) vergrößert ist.

9. Führungshalterung (100) nach Anspruch 8, **dadurch gekennzeichnet, dass** die obere Wand (114a), die untere Wand (114b) und/oder die Seitenwand (112) einen mäandernden Aufbau (133) aufweisen.

10. Führungshalterung (100) nach einem der Ansprüche 1 bis 9, **dadurch gekennzeichnet, dass** die Führungshalterung 100 wenigstens einen weiteren Kanal (105) aufweist, der sich im Wesentlichen von dem vorderen Ende (103) zu dem hinteren Ende (101) erstreckt.

11. Führungshalterung (100) nach Anspruch 10, **dadurch gekennzeichnet, dass** der wenigstens eine Kanal (105) und der wenigstens eine weitere Kanal (105) wenigstens teilweise durch eine Trennwand (115) voneinander getrennt sind.

12. Führungshalterung (100) nach Anspruch 11, **dadurch gekennzeichnet, dass** die Trennwand (115) eine Brücke (120) vorsieht, die den wenigstens einen Halteaufbau (102) im Wesentlichen direkt mit dem wenigstens einen Sitz (104) verbindet.

13. Führungshalterung (100) nach einem der Ansprüche 1 bis 12, **dadurch gekennzeichnet, dass** die Führungshalterung (100) wenigstens zwei Schalen (100a, 100b) umfasst, die sich von dem hinteren Ende (101) zu dem vorderen Ende (103) erstrecken und komplementär zueinander sind.

14. Führungshalterung (100) nach einem der Ansprüche 1 bis 13, **dadurch gekennzeichnet, dass** die wenigstens eine hintere Öffnung (108) im Wesentlichen als eine halbkreisförmige Aussparung (109) in der hinteren Wand (107) ausgebildet ist.

15. Satz für eine Endanordnung (1) zum Abschließen eines Übertragungskabels (300), **gekennzeichnet durch** wenigstens eine Führungshalterung (100) gemäß den vorstehenden Ansprüchen 1 bis 14 sowie eine Endkappe (200) mit einem Fixierungsglied (201), das komplementär zu dem wenigstens einen Halteaufbau (102) der Führungshalterung (100) ausgebildet ist, und/oder ein Adapterteil (700), das komplementär zu dem wenigstens einen Sitz (104) der Führungshalterung (100) ausgebildet ist.

## Revendications

1. Support de guidage (100) pour guider au moins une ligne de transmission (303) entre un capuchon d'extrémité (200) sur un câble de transmission (300) et une borne (400) qui termine ladite au moins une ligne de transmission (303), le support de guidage (100) ayant une extrémité arrière (101) et une extrémité avant (103) et comprenant au moins une structure de maintien (102) à l'extrémité arrière (101), au moins un siège (104) avec un espacement (121) configuré pour recevoir au moins un élément adaptateur (700) pour maintenir la borne (400), et au moins un canal (105) pour guider ladite au moins une ligne de transmission (303) de l'extrémité arrière (101) à l'extrémité avant (103), **caractérisé en ce que** ladite au moins une structure de maintien (102) comprend au moins une rainure (106) qui s'étend essentiellement perpendiculairement audit au moins un canal (105) et au moins partiellement limitée par une paroi arrière (107) du support de guidage (100), dans lequel la paroi arrière (107) est pourvue d'au moins une ouverture arrière (108), ladite au moins une rainure (106) étant configurée pour recevoir un élément de fixation (201) du capuchon d'extrémité (200).

2. Support de guidage (100) selon la revendication 1, **caractérisé en ce que** la largeur et/ou la hauteur dudit au moins un canal (105) dépasse le diamètre de ladite au moins une ligne (303).

3. Support de guidage (100) selon la revendication 1 ou 2, **caractérisé en ce qu'**un passage (111) pour ladite au moins une ligne de transmission (303) est formé dans un séparateur (110) entre ladite au moins une structure de maintien (102) et ledit au moins un canal (105).

4. Support de guidage (100) selon au moins une des revendications 1 à 3, **caractérisé en ce qu'**au moins un contre-élément de fixation (113) pour immobiliser le capuchon d'extrémité (200) par rapport au support de guidage (100) est formé sur ladite au moins une structure de maintien (102).

5. Support de guidage (100) selon la revendication 4, **caractérisé en ce que** ledit au moins un contre-élément de fixation (113) est agencé latéralement sur ladite au moins une structure de maintien (102).

6. Support de guidage (100) selon au moins une des revendications 1 à 5, **caractérisé en ce que** ledit au moins un siège (104) s'ouvre vers l'extrémité avant (103) via une ouverture avant (123).

7. Support de guidage (100) selon au moins une des revendications 1 à 6, **caractérisé en ce qu'**une élasticité verticale et/ou une élasticité latérale du support de guidage (100) dépasse une élasticité longitudinale du support de guidage (100).

8. Support de guidage (100) selon au moins une des revendications 1 à 7, **caractérisé en ce que** des fentes (134) sont formées dans une paroi supérieure (114a), une paroi inférieure (114b) et/ou une paroi latérale (112) du support de guidage (100) de telle sorte que l'élasticité de la paroi supérieure (114a), de la paroi inférieure (114b) et/ou de la paroi latérale (112) est augmentée.

9. Support de guidage (100) selon la revendication 8, **caractérisé en ce que** la paroi supérieure (114a), la paroi inférieure (114b) et/ou la paroi latérale (112) comprennent une structure sinueuse (133).

10. Support de guidage (100) selon au moins une des revendications 1 à 9, **caractérisé en ce que** le support de guidage (100) comprend au moins un autre canal (105) qui s'étend essentiellement depuis l'extrémité avant (103) à l'extrémité arrière (101).

11. Support de guidage (100) selon la revendication 10, **caractérisé en ce qu'**au moins un canal (105) et ledit au moins un autre canal (105) sont au moins partiellement séparés entre eux par une cloison (115).

12. Support de guidage (100) selon la revendication 11, **caractérisé en ce que** la cloison (115) procure un pont (120) qui connecte essentiellement directement ladite au moins une structure de maintien (102) audit au moins un siège (104).

13. Support de guidage (100) selon au moins une des revendications 1 à 12, **caractérisé en ce que** le support de guidage (100) comprend au moins deux coques (100a, 100b) qui s'étendent de l'extrémité arrière (101) à l'extrémité avant (103) et se complètent l'une l'autre.

14. Support de guidage (100) selon au moins une des revendications 1 à 13, **caractérisé en ce que** ladite au moins une ouverture arrière (108) est essentiellement conformée comme une découpe semi-circulaire (109) dans la paroi arrière (107).

15. Kit pour un agencement de terminaison (1) destiné à terminer un câble de transmission (300), **caractérisé par** au moins un support de guidage (100) selon au moins une des revendications 1 à 14 qui précèdent, et par un capuchon d'extrémité (200) comportant un élément de fixation (201) formé de manière complémentaire à au moins une structure de maintien (102) du support de guidage (100), et/ou par un élément adaptateur (700) formé de manière complémentaire audit au moins un siège (104) du support de guidage (100).
